# EUROPEAN PATENT SPECIFICATION

(11) **EP 0 401 768 B1**
(45) Date of publication and mention of the grant of the patent: **02.11.1994**
(21) Application number: 90110646.8
(22) Date of filing: 05.06.1990
(51) Int. Cl.: G05D 23/19, H02H 7/08

(54) **A control device for driving the drum of a washing or drying machine for laundry**
Steuervorrichtung zum Antrieb der Trommel einer Waschmaschine oder eines Wäschetrockners für Wäschereibetrieb
Dispositif de commande pour l'entraînement du tambour d'une machine à laver ou d'un séchoir pour blanchisserie

(30) Priority: 06.06.1989 IT 4573889
(43) Date of publication of application: 12.12.1990
(73) Proprietor: INDUSTRIE ZANUSSI S.p.A., I-33170 Pordenone (IT)
(72) Inventor: Frucco, Giuseppe, I-33170 Pordenone (IT); Maset, Roberto, I-31015 Conegliano, Treviso (IT)
(74) Representative: Herrmann-Trentepohl, Werner, Dipl.-Ing.

(56) References cited:
- EP-A- 0 085 202
- DE-A- 3 023 304
- FR-A- 2 588 581
- US-A- 4 034 415

## Description

The present invention relates to a control device for driving the drum of a washing or drying machine for laundry, according to the preamble of claim 1.

To set the drum rotating during the various washing and rinsing phases of each program for washing the laundry, or during the various drying phases of each program for drying the laundry, one normally utilizes asynchronous or universal electric motors with speed variation. The motor is provided in the lower part of the machine cabinet and connected with a driving pulley of reduced diameter that transmits the movement to the corresponding driven pulley of greater diameter connected with the drum, via a transmission belt. These electric motors are in particular realized with electric windings of insulation classes that withstand relatively elevated working temperatures, and are furthermore provided with at least one thermal link of the conventional type that is connected with the electric windings and disposed in close contact therewith. The link is calibrated for intervention temperatures slightly lower than the maxima tolerated by the electric windings, in such a way as to interrupt the power supply to the latter when the intervention temperatures are reached, thereby preventing dangerous overheating and possible damage both of the windings and of the entire body of the motor.

Although the use of these electric motors in washing and drying machines for laundry leads to satisfactory results in terms of the washing and drying of the laundry, it nevertheless does not permit a further increase in the mechanical action exerted on the laundry when the drum is rotating and for the entire duration of the various washing and drying programs. This would be favorable for optimizing the washing and drying results. However, the motors are normally dimensioned for driving the drum at a full load for predetermined maximum periods of time which, if exceeded, would involve undesirable overheating of the motor, resulting in intervention of the thermal link and a switch-off of the electric windings of the motor for durations sufficient for cooling them. On the other hand, it would be possible to increase this mechanical action of the drum, thereby optimizing the washing and drying results for the laundry, if one utilized oversized electric motors whose electric windings are realized with insulation classes, and therefore with intervention temperatures of the thermal link, that are higher than those of current motors. In this case, however, the motors would be economically burdensome.

The present invention is based on the problem of overcoming the disadvantages and limits described above, by means of a control device for driving the drum of a washing or drying machine for laundry, realized in such a way as to optimize the washing and drying results for the laundry by expediently varying the rate of rotation of the motor of the drum and constantly maintaining the temperature of the motor below predetermined values during the run of each washing and drying program.

This object is solved by a control device according to the characterizing portion of claim 1. The control device is adapted to permit the drum to be driven in simple and efficient fashion during the run of each washing or drying program of the machine.

Preferred embodiments of the invention are defined in the subclaims.

The invention will be better understood from the following description of a preferred embodiment with reference to the adjoined drawing showing the electric circuit diagram of the present control device for driving the drum of a washing or drying machine for laundry.

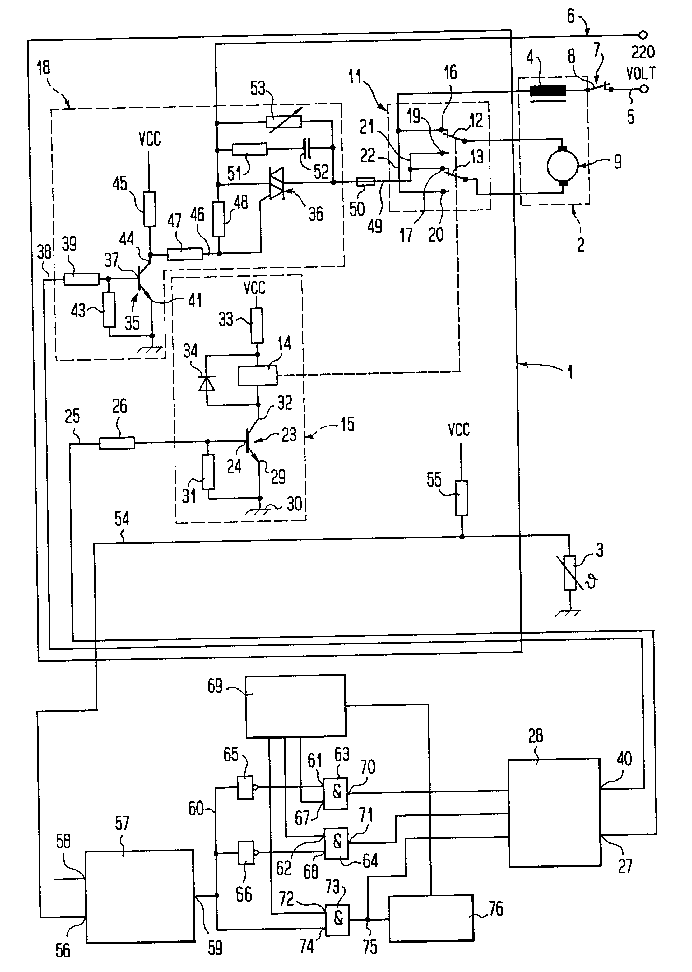

The figure illustrates a control device 1 to be applied in an electric circuit of a washing or drying machine for laundry and adapted to control the drive of an electric motor 2 of the asynchronous or universal type (not shown) for rotating the drum (not shown) of the machine. The control device comprises substantially at least one temperature sensor 3, such as an NTC sensor, a thermistor or any other suitable sensor element known per se, disposed within the frame of the motor in proximity of electric windings 4 of the stator thereof, and adapted to constantly detect the temperature of the windings during the operation of the motor.

In particular, electric windings 4 of the motor stator are fed by main conductors 5 and 6 of the electric supply network and are connected in series with at least one thermal link 7 of the conventional type (e.g. of the bimetal or amperometric type), whose electric contact 8 is normally closed. The electric contact 8 is opened, thereby switching off the electric windings, when predetermined maximum intervention temperatures are reached that are due to the heating of the electric windings during operation of the motor and are tolerated by the electric insulation of the windings.

The electric windings are furthermore adapted to be connected electrically in series with electric windings 9 of the rotor of the electric motor via a change-over relay 11, or the like, to be moved into two different operating positions to effect the drive of the rotor in the two opposite directions of rotation thereof. For this purpose, change-over relay 11 is provided with two moving electric contacts 12 and 13 connected to the terminals of windings 9 of the rotor and adapted to be driven simultaneously from one operating position to the other via electromagnet 14 of the relay, that can be energized and deenergized via an electric circuit 16 whose realization and functioning will be described below.

Moving contacts 12 and 13 can close, respectively, on two mutually separate fixed electric contacts 16 and 17, contact 16 being connected with electric windings 4 of the motor stator and contact 17 being connected with a further electric circuit 18 for controlling the rotation of the motor, realized as described below. Otherwise, they can close on two further fixed contacts 19 and 20 respectively connected with aforesaid fixed contacts 17 and 16 via corresponding conductors 21 and 22.

In particular, electric circuit 16 may consist of e.g. a transistor 23, whose base 24 is connected, via an electric conductor 25 having a limiting resistor 26 connected therein, with a first output 27 of an electronic control 28 of the conventional type adapted to control the drive of the electric motor of the machine during each washing or drying program selected. The transistor 23 is connected with its emitter 29 to ground 30, to which base 24 is also connected via a grid leak resistor 31, and with its collector 32 to a supply voltage Vcc, via a resistor 33 and electromagnet 14 of change-over relay 11, to which a threshold diode 34 is connected in parallel.

In this way, in accordance with the presence or absence of an electric signal in correspondence with output 27 of electronic control 28, transistor 23 is switched from the ON state to the OFF state, and vice versa, thereby energizing or deenergizing electromagnet 14 of relay 11 and moving contacts 12 and 13 of the relay from one or to the other operating position and driving the motor in one or the other of its two directions of rotation.

In its turn, electric circuit 18 for controlling the drive of the motor may consist e.g. of a transistor 35 and an electronic power control switch 36 of the conventional type, transistor 35 being connected with its base 37 to a second output 40 of electronic control 28 via a conductor 38 having a limiting resistor 39 connected therein. The transistor is furthermore connected with emitter 41 to ground 42, to which base 37 is also connected via a grid leak resistor 43, and with its collector 44 to aforesaid supply voltage Vcc via a resistor 45.

Collector 44 of transistor 35 is furthermore connected with power control switch 36 via an electric conductor 46 having two grid leak resistors 47 and 48 connected therein, that are connected with main conductor 6 of the supply network. The power control switch is in turn connected in series with fixed contacts 17 and 19 of change-over relay 11 via an electric conductor 49 having a protective fuse 60 connected there in, and in parallel with the series of a resistor 51 and a capacitor 52 and with a variable regulating resistor 53.

In this way, power control switch 36 is able to regulate the rate and also the speed of rotation of the electric motor, under the influence of electronic control 28, during the run of each washing or drying program of the machine.

Finally, temperature sensor 3 is connected via a resistor 55 with supply voltage Vcc and via an electric conductor 54 with a first input 56 of an electronic comparator 57 adapted to perform the comparison between the voltage levels generated by sensor 3 and proportional to the temperature detected by the sensor resulting from the heating of electric windings 4 of the stator during the operation of the motor, with a predetermined level of reference voltage applied to a second input 58 of the comparator.

This electronic comparator 57 is furthermore provided with an output 59 connected in the way and for the purposes described below, that is adapted to be switched from one to the other of two different logic states in accordance with the result of comparison between the respective voltage levels applied to two inputs 56 and 58 of the comparator.

Comparator 57 is connected with its output 59, via a common electric conductor 60, with a respective first input 61 and 62 of corresponding logic AND circuits 63 and 64 via a respective logic commutator 65 and 66 of the conventional type. Respective second inputs 67 and 68 of logic AND circuits 63 and 64 are in turn connected with an electronic unit 69 for controlling the run of the washing or drying programs selected, this unit being designed to vary the drive rates for motor 2 in accordance with the type of fabric to be treated. Outputs 70 and 71 of logic AND circuits 63 and 64 are in turn connected with electronic control 28 described above.

Electronic unit 69 consists in particular of conventional logic circuits (not shown) designed to vary their logic state in accordance with predetermined sequences during each washing or drying program selected, in such a way as to correspondingly vary the logic state of one or the other of inputs 67 and 68 of logic AND circuits 63 and 64 and, therefore, also the logic state of corresponding outputs 70 and 71 of AND circuits 63 and 64.

These logic circuits are furthermore designed to drive motor 2 at respectively different rates, so that this solution makes it possible to effect the drive of the motor at four different rates via electronic control 28, upon activation of one or the other, both or neither of the logic circuits.

Finally, comparator 57 is also connected with its output 69 to a first input 72 of a further logic AND circuit 73, whose second input 74 is supplied with a predetermined voltage that may also be generated by control unit 69 and whose output 76 is connected both with electronic control 28 and with control unit 69 via a time lag relay 76 or similar counting element.

The purpose of logic AND circuit 73 is to effect a further drive of the motor at a predetermined rate that is slower than the maximum effected via logic circuits 63 and 64, when its input 72 and its output 75 are at logic level "1", in the operating states described below, in proximity of the maximum heating temperature of electric windings 4 and 9 of the motor and of the intervention temperature of thermal link 7.

This switch-on of motor 2 is maintained for a predetermined duration sufficient to permit a gradual cooling of the windings of the motor, thanks to the reduced rate of rotation, down to the normal operating temperatures.

Thus, by expediently dimensioning the predetermined rate of rotation of the motor it is possible to reach the operating temperatures while maintaining it switched on for minimum durations, without effecting the intervention of thermal link 7.

This period of time when motor 2 is switched on is furthermore counted by time lag relay 76 and stored in control unit 69, which, as soon as the motor has reached the operating temperature, in turn effects the drive of the motor at the usual rates provided in the washing or drying programs selected and for a supplementary period of time, after the end of the programs, that is equal to the switch-on time described above.

The operation of the present control device is thus evident. When a particular washing or drying program to run off in the machine has been selected in the conventional way, motor 2 is at a stand still, so that temperature sensor 3 detects that the electric windings of the motor are at ambient temperature, thereby generating a voltage proportional to the temperature that is applied to input 56 of comparator 57 and is lower than the reference voltage applied to the other input 58 of the comparator.

Consequently, output 59 of the latter remains in the logic state "0", so that corresponding inputs 61 and 62 of logic AND circuits 63 and 64 are switched to the logic state "1" via respective logic commutators 65 and 66, while input 72 of logic AND circuit 73 in turn remains in the logic state "0".

Thus, in accordance with the sequence of logic states "0" or "1" assumed by inputs 67 and 68 of respective logic AND circuits 63 and 64 and effected by control unit 69, respective outputs 70 and 71 of logic circuits 63 and 64 are switched selectively or simultaneously to the logic state "1", so that electronic control 28 controls the drive of the motor at a corresponding rate, electric windings 4 of the motor being switched on or off via transistor 35 and power control switch 36 of electric circuit 18, and the periodical reversal of the direction of rotation being performed via transistor 23 and electromagnet 14 of relay 11 of electric circuit 15.

These functional states of motor 2 are maintained unchanged during the run of each washing or drying program selected, and as long as temperature sensor 3 detects that the heating temperature of the electric windings of the motor is below the limit values withstood by the windings.

However, if the electric windings should overheat undesirably during operation, reaching temperatures close to the limits withstood by the windings, due e.g. to excessive or unbalanced loads of laundry in the drum and/or to prolonged driving times of the motor at rapid rates, temperature sensor 3 immediately detects these temperatures furthermore generating increasing voltages that are applied to input 56 of comparator 57.

This temperature sensor is in particular calibrated so as to generate a voltage identical to the reference voltage, applied to input 58 of comparator 57, at a heating temperature of the windings that is slightly lower than the intervention temperature of thermal link 7.

Thus, when this heating temperature of the windings of motor 2 is reached, whereby the voltages applied to both inputs 56 and 58 of comparator 57 are equal to each other, output 59 of the latter is switched to the logic state "1", thereby switching inputs 61 and 62 of respective logic AND circuits 63 and 64 to the logic state "0" via corresponding logic commutators 65 and 66, and switching input 72 of logic AND circuit 73 to the logic state "1".

Consequently, since both logic AND circuits 63 and 64 are inactive, electric motor 2 is set rotating exclusively via logic AND circuit 73 at a slow rate of rotation predetermined by this circuit and so as to permit the windings of the motor to cool down to the operating temperature thereof, in that sensor 3 generates a voltage that is lower than the reference voltage of comparator 57, thereby switching output 59 of the latter to the logic state "0" and rendering AND circuit 73 inactive and controlling the drive of the motor, as above, via one or the other or both or neither of AND circuits 63 and 64.

Thus, utilizing the control device according to the invention it is possible to drive the motor, and therefore the drum, for the entire duration of each washing or drying program of the machine without interrupting the supply thereto, thereby allowing for the use of motors dimensioned to withstand relatively elevated heating temperatures of the windings and optimizing the mechanical action for treating the laundry and thus the washing and drying results.

## Claims

1. A control device (1) for driving the drum of a washing or drying machine for laundry, comprising: an electric motor (2) associated with the drum, and provided with electric windings (4,9) connected with at least one thermal link (7) adapted to switch off the windings when an intervention temperature thereof is reached; first (16) and second (18) control means interconnected with the motor and adapted to affect its direction and rate of rotation respectively, in alternating directions of rotation, and to control its rate of rotation during each washing or dry ing program selected; and at least one temperature sensor adapted to detect the temperature of the electric windings (4) and to generate corresponding voltages proportional to this temperature, **characterized in that** it comprises comparator means (57) connected with the second control means (63, 64, 73, 69) and with the temperature sensor (3) and adapted to compare the voltage generated by the sensor (3) with a predetermined reference voltage for affecting, in accordance with this comparison, the rate of rotation of the motor (2) via the second control means (63, 64, 73, 69), so that the temperature of the windings is constantly maintained below predetermined values during the run at each washing and drying program.

2. The control device of claim 1, **characterized in that** the second control means comprise a plurality of logic AND circuits (63, 64, 73) adapted to set the motor (2) rotating at respectively different rates, and an electronic control unit (69) adapted to switch on the motor (2) selectively via the logic AND circuits (63, 64, 73).

3. The control device of claim 2, **characterized in that** the comparator means comprise at least one electronic comparator (57) whose inputs (56, 58) are connected respectively with the temperature sensor (3) and with the predetermined reference voltage and whose output (59) is connected with a respective first input (61, 62) of the logic AND circuits (63, 64) via a respective logic commutator (65, 66), and is connected directly with a first input (72) of a further logic AND circuit (73), the logic AND circuits (63, 64, 73) being respectively connected with their second inputs (67, 68, 74) to the electronic control unit (69) and to a predetermined voltage and with their outputs (70, 71, 76) to the motor (2) via the first control means (28, 18, 15, 11).

4. The control device of claim 3, **characterized in that** the output (75) of the further logic AND circuit (73) is also connected with the electronic control unit (69) via at least one time lag relay (76) or
similar element adapted to count the switch-on time of the motor (2) via the further logic circuit (73), and the control unit (69) is adapted to maintain the motor (2) switched on for this time, after the end of each washing or drying program, via the logic circuits (63, 64).

5. The control device of claim 1, **characterized in that** the temperature sensor (3) is calibrated to generate a voltage identical to the reference voltage in correspondence with a temperature of the electric windings (4, 9) that is slightly lower than the intervention temperature of the thermal link (7).

## Patentansprüche

1. Steuervorrichtung (1) zum Antrieb einer Trommel einer Wasch- oder Trockenmaschine für Wäsche, umfassend:
einen elektrischen Motor (2), der der Trommel zugeordnet und mit elektrischen Wicklungen (4,9) versehen ist, welche mit mindestens einem thermischen Verbindungselement (7) verbunden sind, das die Wicklungen abschaltet, wenn eine Eingriffstemperatur derselben erreicht ist; erste (16) und zweite (18) Steuereinrichtung, welche mit dem Motor verbunden sind und die Richtung bzw die Geschwindigkeit seiner Drehung beeinflußen in abwechselnde Drehrichtungen und um seine Drehgeschwindigkeit während des gewählten Wasch- oder Trockenprogramms zu steuern; und mindestens einem Temperatur-Sensor zum Detektieren der Temperatur der elektrischen Wicklung (4) und zum Erzeugen entsprechender Spannungen proportional zu dieser Temperatur, **gekennzeichnet durch** eine Vergleichseinrichtung (57), welche mit der zweiten Steuereinrichtung (63, 64, 73, 69) und mit dem Temperatur-Sensor (3) verbunden ist und geeignet ist, die von dem Sensor (3) erzeugte Spannung mit einer vorgegebenen Bezugsspannung zu vergleichen zum Beeinflussen der Drehgeschwindigkeit des Motors (2) in Übereinstimmung mit diesem Vergleich über die zweite Steuereinrichtung (63, 64, 73, 69), so daß die Temperatur der Wicklungen konstant unterhalb vorgegebener Werte während des Laufs jedes Wasch- und Trockenprogramms gehalten ist.

2. Steuervorrichtung nach Anspruch 1, **dadurch gekennzeichnet, daß** die zweite Steuereinrichtung eine Anzahl von logischen UND-Schaltkreisen (63, 64, 73) umfaßt, die geeignet sind, den Motor (2) auf jeweils verschiedene Geschwindigkeiten einzustellen, und eine elektronische Steuereinrichtung (69) zum Einschalten des Motors (2) selektiv über die logischen UND-Schaltkreise (63, 64, 73).

3. Steuervorrichtung nach Anspruch 1, **dadurch gekennzeichnet, daß** die Vergleichseinrichtung mindestens einen elektronischen Komparator (57) umfaßt, dessen Eingänge (56, 58) jeweils verbunden sind mit dem Temperatur-Sensor (3) und mit der vorbestimmten Bezugsspannung und dessen Ausgang (59) verbunden ist mit einem jeweiligen ersten Eingang (61, 62) der logischen UND-Schaltkreise (63, 64) über einen jeweiligen logischen Kommutator (65, 66) und direkt verbunden ist mit einem ersten Eingang (72) eines weiteren logischen UND-Schaltkreises (73), wobei die logischen UND-Schaltkreise (63, 64, 73) mit ihren zweiten Eingängen (67, 68, 74) jeweils verbunden sind mit der elektronischen Steuereinheit (69) und mit einer vorbestimmten Spannung und mit deren Ausgängen (70, 71, 76) verbunden mit dem Motor (2) über die erste Steuereinrichtung (28, 18, 15, 11).

4. Steuervorrichtung nach Anspruch 3, **dadurch gekennzeichnet, daß** der Ausgang (75) des weiteren logischen UND-Schaltkreises (73) ebenso verbunden ist mit der elektronischen Steuereinheit (69) über mindestens ein Zeitverzögerungsrelais (76) oder einem ähnlichen Element zum Zählen der Einschaltzeit des Motors (2) über den weiteren logischen Schaltkreis (73), und wobei die Steuereinheit (69) geeignet ist, um den Motor (2) für diese Zeit einzuschalten nach dem Ende jedes Wasch- oder Trockenprogramms über die logischen Schaltkreise (63, 64).

5. Steuervorrichtung nach Anspruch 1, **dadurch gekennzeichnet, daß** der Temperatursensor (3) kalibriert ist, um eine Spannung zu erzeugen, die identisch mit der Bezugsspannung in Abhängigkeit mit einer Temperatur der elektrischen Wicklung (4,9) zu erzeugen, die leicht unterhalb der Eingriffstemperatur der thermischen Verbindung (7) ist.

## Revendications

1. Dispositif de commande (1) destiné à l'entraînement du tambour d'une machine à laver ou à sécher le linge, comprenant : un moteur électrique (2) associé au tambour et pourvu d'enroulements électriques (4, 9) reliés à au moins un protecteur thermique (7) adapté à mettre hors service les enroulements lorsque leur température d'intervention est atteinte; des premiers et seconds moyens de commande interconnectés au moteur et adaptés de façon à agir respectivement sur sa direction et sa vitesse de rotation, dans des directions alternées de rotation et à commander sa vitesse de rotation durant chaque programme de lavage ou de séchage sélectionné; et au moins un capteur de température adapté à mesurer la température des enroulements électriques (4) et à produire des tensions correspondantes, proportionnelles à cette température, caractérisé en ce qu'il comprend un moyen comparateur (57) connecté aux seconds moyens de commande (63, 64, 73, 69) et au capteur de température (3) et adapté à comparer la tension produite par le capteur (3) avec une tension de référence prédéterminée afin d'agir, en fonction de cette comparaison, sur la vitesse de rotation du moteur (2) par les seconds moyens de commande (63, 64, 73, 69), de manière que la température des enroulements soit maintenue constamment au-dessous de valeurs prédéterminées au cours de chaque programme de lavage et de séchage.

2. Dispositif de commande selon la revendication 1, caractérisé en ce que les seconds moyens de commande comprennent une pluralité de circuits ET logiques (63, 64, 73) adaptés à faire tourner le moteur (2) à des vitesses différentes respectives, et une unité de commande électronique (69) adaptée de façon à mettre sélectivement en service le moteur (2), par les circuits ET logiques (63, 64, 73).

3. Dispositif de commande selon la revendication 2, caractérisé en ce que les moyens comparateurs comprennent au moins un comparateur électronique (57) dont les entrées (56, 58) sont respectivement connectées au capteur de température (3) et à la tension de référence prédéterminée et dont la sortie (59) est connectée à une première entrée (61, 62) respective des circuits ET logiques (63, 64), par un commutateur logique (65, 66) correspondant, et est reliée directement à une première entrée (72) d'un autre circuit ET logique (73), les circuits ET logiques (63, 64, 73) étant respectivement reliés par leurs secondes entrées (67, 68, 74) à l'unité de commande électronique (69) et à une tension prédéterminée et par leurs sorties (70, 71, 76) au moteur (2), par les premiers moyens de commande (28, 18, 15, 11).

4. Dispositif de commande selon la revendication 3, caractérisé en ce que la sortie (75) de l'autre circuit ET logique (73) est également reliée à l'unité de commande électronique (69), par au moins un relais temporisé (76) ou un élément analogue, adapté de façon à compter le temps de mise en service du moteur (2) par l'autre circuit logique (73), et l'unité de commande (69) est adaptée à maintenir le moteur (2) en service pendant cette période, après la fin de chaque programme de lavage ou de séchage, par les circuits logiques (63, 64).

5. Dispositif de commande selon la revendication 1, caractérisé en ce que le capteur de température (3) est calibré de façon à produire une tension identique à la tension de référence, en correspondance à une température des enroulements électriques (4, 9) qui est légèrement inférieure à la température d'intervention du protecteur thermique (7).
